(19) Europäisches Patentamt
European Patent Office
Office européen des brevets

(11) Veröffentlichungsnummer : **0 129 178**
**B1**

(12) **EUROPÄISCHE PATENTSCHRIFT**

(45) Veröffentlichungstag der Patentschrift : **19.08.87**

(51) Int. Cl.⁴ : **C 09 D 3/80**, C 09 D 3/733

(21) Anmeldenummer : **84106636.8**

(22) Anmeldetag : **09.06.84**

(54) **Heisssiegelbare Beschichtungsmassen.**

(30) Priorität : **16.06.83 DE 3321797**

(43) Veröffentlichungstag der Anmeldung : **27.12.84 Patentblatt 84/52**

(45) Bekanntmachung des Hinweises auf die Patenterteilung : **19.08.87 Patentblatt 87/34**

(84) Benannte Vertragsstaaten : **CH DE FR GB IT LI NL SE**

(56) Entgegenhaltungen : **GB-A- 2 077 276**

(73) Patentinhaber : **Röhm GmbH**
**Kirschenallee Postfach 4242**
**D-6100 Darmstadt 1 (DE)**

(72) Erfinder : **Markert, Gerhard, Dr.**
**Leipziger Strasse 25**
**D-6105 Ober-Ramstadt (DE)**
Erfinder : **Pennewiss, Horst, Dr.**
**Meissnerweg 53**
**D-6100 Darmstadt (DE)**
Erfinder : **Schleier, Waldemar**
**Gutenbergstrasse 42**
**D-6100 Darmstadt (DE)**
Erfinder : **Schnee, Reiner, Dr.**
**Arheilger Woogstrasse 62**
**D-6100 Darmstadt (DE)**

**EP 0 129 178 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung

Die Erfindung betrifft heißsiegelbare Beschichtungsmassen auf Polymerbasis.

Stand der Technik

Die Technik weist einen steigenden Bedarf an Mehrschichten-Verbundmaterial auf. Ein Anwendungsgebiet stellen z. B. Kunststoff-Verpackungen dar, wobei steife, halbsteife oder weiche Materialien zur Anwendung kommen.

Die Verbundmaterialien können sowohl mittels Koextrusion als auch durch Laminieren hergestellt werden. Häufig verwendete Kunststoff-Verbundmaterialien und ihre Anwendungsgebiete sind z. B. in Ullmanns Encyclopädie der Techn. Chemie, Bd. 16, S. 101-103, zusammengestellt.

Probleme wirft der Verbund von beispielsweise Aluminium und bestimmten Kunststoffen wie Polyolefinen oder auch Kunststoffen untereinander wie Polymethylmethacrylat mit Polypropylen auf.

Aus dem Stand der Technik sind heißsiegelfähige Pfropfpolymerisate von Polyolefinen bekannt.

Mit Ethylen-Propylen-Copolymeren — auf die haftungsvermittelnde Monomere wie (Methacryloyloxy)propyl-trimethoxysilan und Glycidylmethacrylat aufgepfropft wurden — erhält man z. B. Metallhaftung (vgl. JP-OS 76-65 185, JP-OS 76-125 122, JP-OS 77-21 089). Carboxylgruppenhaltige Polyolefine mit Hafteigenschaften können z. B. durch Pfropfung von Acrylsäure auf Ethylen-Propylen-Copolymere (vgl. JP-OS 79 90 346, JP-OS 76-104 954) oder auf Ethylen-Alkylacrylat-Copolymere (vgl. DE-OS 26 06 389, BE-PS 875 974) gewonnen werden. Es finden sich in der Patentliteratur Hinweise auf Emulgatoren für wäßrige Systeme, die durch Pfropfung von z. B. Vinylacetat-Ethylen-Copolymeren mit α,β-ungesättigten Säuren und Estern in organischen Lösungsmitteln hergestellt werden können (JP-OS 77-142 687, JP-OS 77-142 686).

Stabile Suspensionen von carboxylgruppenhaltigen Pfropfpolymerisaten in einem organischen Lösungsmittel erhält man durch schnelles Abkühlen einer Lösung des Pfropfpolymerisats in dem organischen Lösungsmittel (Europ. Patentveröffentlichung 47 705). Zu dieser Suspension wird gepulvertes Polyolefin oder mit Acrylsäure gepfropftes Polyolefin zugesetzt, wobei eine stabile Suspension mit 10-25 Gew.-% Polymergehalt erhalten wird.

Durch ähnliches Vorgehen werden Suspensionen aus Lösungen von Acrylsäure-gepfropften Polyethylen und Paraffin, Polystyrol oder Ethylen-Propylen-Copolymeren in Heptan erhalten (FR-OS 2 470 002).

Aus der DE-OS 31 26 451 sind ferner modifizierte Polyolefinklebstoffmischungen bekannt, die (a) 0,1 bis 40 Gew.-Teile eines Pfropfcopolymeren aus etwa 70 bis 99,999 Gew.-% einer Polyethylengrundlage, die mit 30 bis 0,001 Gew.-% wenigstens eines als Pfropfreis dienenden Monomeren, das seinerseits aus wenigstens einer polymerisierbaren, äthylenisch-ungesättigten Carbonsäure oder einem entsprechenden Carbonsäureanhydrid in einer dem Gesamtwert von 100 % erreichenden Menge besteht und (b) etwa 99,9 bis 60 Gew.-Teile eines einzumischenden Harzgemisches aus etwa 25-75 Gew.-% eines linearen Polyethylens niedriger Dichte und etwa 75-25 Gew.-% eines Polypropylens bis zum Gesamtwert von 100 % enthalten. Beide Polymergrundlagen entsprechen demnach als Polyolefine demselben Polymertyp. Eine Anwendung in Dispersionsform läßt sich der DE-OS nicht entnehmen.

Um chemisch gleichartige Bestandteile handelt es sich auch bei den vorzugsweise in der Lackbeschichtung eingesetzten Non-Aqueous-Dispersions (NAD). So werden in der GB-A 2 077 276 Polymerdispersionen beschrieben, die als Polymerbestandteile erstens ein Polymer aus Methylmethacrylat und Allylmethacrylat, Alkylaminoalkylmethacrylat oder einer Mischung derselben, zweitens ein Copolymer aus Methylmethacrylat, einem Alkylacrylat mit 6-12 Kohlenstoffatomen im Alkylrest und schließlich ein Pfropfpolymer aus dem ersteren als Hauptkette und dem letzteren als Seitenkette in definierten Lösungsmitteln enthalten.

Aufgabe

Die Technik hat in vielen Varianten Pfropfpolymerisate als heißsiegelfähige Beschichtungen oder mit etwas anderer Fragestellung als Schmelzkleber zur Verfügung gestellt. Dabei wurde versucht, die Forderung nach genügender Haftung auf Metalloberflächen durch Co- bzw. Pfropfpolymerisation mit bekannten haftungsvermittelnde Gruppen enthaltenden Monomeren, insbesondere der Carboxylgruppe, zu erfüllen.

Die Polymerisate werden allgemein in fester Form auf die zu fügenden bzw. zu beschichteten Flächen aufgebracht und in bekannter Weise thermisch gefügt bzw. gesiegelt. Die vor kurzem vorgeschlagenen Polymersuspensionen in organischen Lösungsmitteln setzen ein zweistufiges Herstellungsverfahren voraus, bei dem zunächst eine Polymerlösung thermisch abgeschreckt wird und dahin ein weiteres Polymeres in Pulverform eingetragen wird (EP-A 47 705). Der vorgesehene Kerndurchmesser des Polymerpulvers liegt bei 5-80 Mikron. Die Temperaturen, auf die die Polymerlösung im ersten Schritt

erhitzt werden, müssen zur Lösung des Polymerisats ausreichen. Den Beispielen nach zu urteilen liegt die Temperatur zur Lösung von 5 % Ethylen in Heptan bei 150 Grad C.

Der Zwang zum jähen Abkühlen einer solchen Lösung stellt — insbesondere in technischem Maßstab — eine Belastung des Verfahrens dar. Anschließend muß das Polymere in Pulverform mit einem bestimmten Verteilungsgrad der so hergestellten Suspension beigemischt werden, wobei offenbar für jedes Polymer/Lösungsmittel-System besondere Randbedingungen zu gelten haben. Es bestand daher das Bedürfnis nach einem heißsiegelfähigen Beschichtungsmittel aus mehreren Polymerkomponenten, welche gegenüber verschiedenartigen Haftuntergründen in differenzierter Weise Haftfähigkeit entwickeln. Diese Beschichtungsmittel sollten mit möglichst geringem technischen Aufwand in Anlehnung an die technischen Polymerisationsverfahren herstellbar sein.

Lösung

Zur Lösung der vorliegenden Aufgabe wird ein heißsiegelfähiges, zur Versiegelung verschiedenartiger Untergründe geeignetes Beschichtungsmittel bestehend aus einer filmbildenden Dispersion mindestens zweier verschiedener Polymertypen A und X mit jeweils unterschiedlichen Hafteigenschaften in einem organischen Lösungsmittelsystem L, vorgeschlagen, wobei der eine Polymertyp A ein Olefinpolymer oder Olefincopolymer, der andere Polymertyp X ein Acrylharz darstellt und wobei mindestens eine der Polymertypen bei Raumtemperatur mit dem organischen Lösungsmittelsystem L unbegrenzt mischbar ist, beide Polymertypen jeweils eine Säurezahl von 0 bis 160 mg KOH pro Gramm Polymerisat besitzen und die Dispersion außer den beiden Polymertypen A und X ein aus Komponenten, die beiden Polymertypen entsprechen, aufgebautes Polymerisat enthält.

Die Säurezahl der Polymeren ist definiert als die Menge an KOH, die genügt um 1 g der Probe, d. h. des Polymerisats zu neutralisieren. (Vgl. F. De Snell & L. S. Ettre in Encyclopedia of Industrial Chemical Analysis Vol. 8, pp. 389-395, Interscience Publishers 1969). Die Verschiedenartigkeit der Polymertypen A und X beruht darauf, daß sie aus verschiedenartigen Monomertypen aufgebaut sind. Sie sind z. B. im allgemeinen in Lösungsmitteln nicht miteinander kompatibel. Erfindungsgemäß handelt es sich bei dem Polymertyp A um Polyolefine und Olefincopolymerisate (OCP) und bei dem Polymertyp X um Polymethacrylate bzw. -acrylate (Acrylharze), die unterschiedliche bzw. nicht-kompatible Hafteigenschaften aufweisen. Das erfindungsgemäß zusätzlich anwesende, aus beiden Polymertypen A und X aufgebaute Polymerisat, kann ein Pfropf- oder ein Blockpolymerisat darstellen.

Das Pfropfpolymerisat, das in der Regel Emulgatoreigenschaften aufweist, besteht somit aus Komponenten die den beiden Polymertypen A und X entsprechen.

Im allgemeinen steht die Gesamtheit der Polymereinheiten vom Typ A zu der Gesamtheit der Polymereinheiten vom Typ X in der Dispersion im Gewichtsverhältnis 1 zu 5 bis 50 zu 1.

Die erfindungsgemäß einzusetzenden Pfropfpolymerisate entsprechen dem Typ I

$$A'—X' \qquad I$$

worin A' für ein Segment aus Olefincopolymerisat-Sequenzen, hydrierten Polyisopren-Sequenzen oder hydrierten Copolymeren aus Butadien/Isopren besteht.

Die erfindungsgemäß zu verwendenden Olefinpolymerisate und -Copolymerisate entsprechend A sind an sich bekannt. Es handelt sich in erster Linie um aus Ethylen-, Propylen-, Butylen- oder/und weiteren -Olefinen mit 5-20 C-Atomen aufgebaute Polymerisate, wie sie bereits als heißsiegelfähige Massen empfohlen worden sind. Das Molekulargewicht liegt im allgemeinen bei 10 000 bis 300 000, vorzugsweise zwischen 50 000 und 150 000. Olefincopolymerisate des anzuwendenden Typs sind beispielsweise in den deutschen Offenlegungsschriften DE-OS 16 44 941, DE-OS 17 69 834, DE-OS 19 39 037, DE-OS 19 63 039 und DE-OS 20 59 981 beschrieben. Sofern A' ein Segment aus einem hydrierten Polyisopren darstellt, so sind käufliche Blockcopolymere auf der Basis eines selektiv hydrierten Polyisopren/Polystyrol (z. B. das Handelsprodukt SHELLVIS 50®) bevorzugt.

Besonders gut brauchbar sind Ethylen-Propylen-Copolymere ; ebenfalls sind Terpolymere unter Zusatz der bekannten Terkomponenten, wie Äthyliden-Norbornen (vgl. Macromolecular Reviews, Vol. 10 (1975) möglich, es ist jedoch deren Neigung zur Vernetzung beim Alterungsprozeß mit einzukalkulieren. Die Verteilung kann dabei weitgehend statistisch sein, es können aber auch mit Vorteil Sequenzpolymere mit Ethylenblöcken angewendet werden. Das Verhältnis der Monomeren Ethylen-Propylen ist dabei innerhalb gewisser Grenzen variabel, die bei etwa 95 % für Ethylen und etwa 95 % für Propylen als obere Grenze angesetzt werden können.

Das Polymerisat X bzw. das Segment X' in Formel I besteht definitionsgemäß aus Polyacrylat- und/oder Polymethacrylat-Sequenzen. Diese sind für sich genommen, z. B. in Form eines entsprechenden Homo- oder Copolymerisats, im Lösungsmittelsystem L löslich. Das Polymerisat X bzw. Segment X' ist im allgemeinen zu mehr als 50 Gew.-%, vorzugsweise zu 80 bis 100 Gew.-% (z. B. wenn bezogen auf das Segment X') aufgebaut aus Monomeren der Formel II

(Siehe Formel Seite 4 f.)

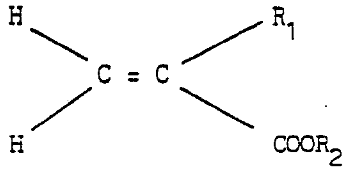

(II)

worin $R_1$ für Wasserstoff oder Methyl und $R_2$ für einen Alkylrest, einen araliphatischen oder aromatischen Rest, mit 1 bis 30 Kohlenstoffatomen, vorzugsweise 1 bis 20 Kohlenstoffatomen steht. Im Polymer X bzw. im Segment X' können ferner enthalten sein :

Monomere der Formel III

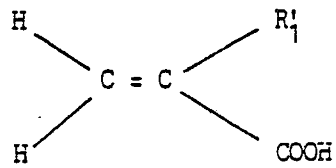

(III)

worin $R'_1$ für Wasserstoff oder Methyl steht oder/und polymerisationsfähige Säureanhydride und/oder Monomere der Formel IV

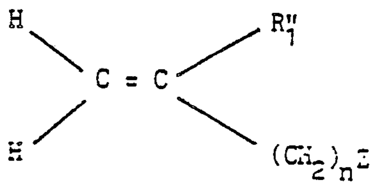

(IV)

worin $R''_1$ Wasserstoff oder Methyl und Z einen gegebenenfalls alkylsubstituierterten Phenylrest, einen —$COR_3$-Rest, einen

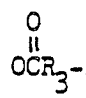 -Rest,

einen —$CR_4$-Rest oder ein Chloratom bedeutet und worin $R_3$ und $R_4$ für einen gegebenenfalls verzweigten Alkylrest mit 1 bis 20 Kohlenstoffatomen oder für einen Phenylrest und n für 0 oder 1 steht, und/oder Monomeren der Formel V

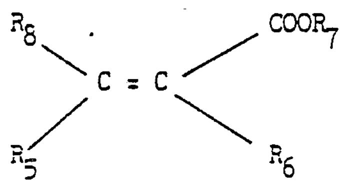

(V)

worin $R_5$ und $R_8$ Wasserstoff oder einen Rest —$COOR'_7$, $R_6$, Wasserstoff oder einen Rest —$CH_2COOR''_7$ bedeuten mit der Maßgabe, daß die Verbindung der Formel V zwei carboxylhaltige Gruppen enthalten muß und worin $R_7$, $R'_7$ und $R''_7$ für Wasserstoff oder einen gegebenenfalls verzweigten Alkylrest mit 1 bis 20 Kohlenstoffatomen oder Phenyl stehen. Das Polymere X bzw. das Segment X' kann gegebenenfalls noch Anteile der Monomeren der Formel VI enthalten

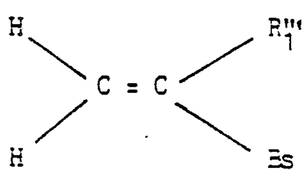

(VI)

worin $R'''_1$ die Bedeutung von $R_1$ besitzt und Bs für einen stickstoffhaltigen funktionellen Rest wie eine —C≡N Gruppe, eine Gruppe —$CONR_9R_{10}$, worin $R_9$ und $R_{10}$ unabhängig voneinander für Wasserstoff oder einen Alkylrest mit 1 bis 20 Kohlenstoffatomen steht, oder worin $R_9$ und $R_{10}$ unter Einbeziehung des Stickstoffs einen heterocyclischen 5- oder 6-Ring bilden oder worin Bs für einen (inerten) heterocyclischen Rest, insbesondere einen Pyridin-, Pyrolidin-, Imidazol-, Carbazol-, Lactam-Rest bzw. alkylierte Derivate derselben steht oder Bs die Bedeutung $-CH_2OH$ besitzt, oder worin Bs die Bedeutung

$$-COO-Q-R_{11}$$

besitzt, worin Q für einen, gegebenenfalls alkylsubstituierten Alkylenrest mit 2 bis 8 Kohlenstoffatomen und $R_{11}$ für $-OH$, für $-OR'''_7$ oder für einen Rest $-NR'_9R'_{10}$ steht, wobei $R'''_7$, $R'_9$ und $R'_{10}$ die gleichen Bedeutungen wie $R_7$, $R_8$ und $R_9$ besitzen, z. B. zusammen mit dem Stickstoffatom, gegebenenfalls unter Einbeziehung eines weiteren Heteroatoms einen fünf- bis sechsgliedrigen heterocyclischen Ring bilden.

Als Beispiele für Monomeren der Formeln IV bzw. V seien besonders genannt Styrol, α-Methylstyrol, Vinylchlorid, Vinylacetat, Vinylstearat, Vinylmethylketon, Vinylisobutyläther, Allylacetat, Allylchlorid, Allylisobutyläther, Allylmethylketon, Dibutylmaleinat, Dilaurylmaleinat, Dibutylitaconat.

Der Anteil der Monomeren der Formel III-VI am Segment X' liegt im allgemeinen zwischen 0 und 50 Gew.-%, vorzugsweise bei 0 bis 20 Gew.-%, (bezogen auf die Monomeren des Segments X'). Der Anteil der Monomeren der Formeln III und/oder VI am Segment X' wird im allgemeinen 20 Gew.-% nicht überschreiten, in der Regel liegt er bei 0 bis 10 Gew.-%, vorzugsweise 0 bis 5 Gew.-%.

Im einzelnen wird das Segment X' nach Anteil und Zusammensetzung zweckmäßigerweise im Hinblick auf die Gewünschte, technische Funktion gewählt werden.

Der Anteil der polaren Monomeren der Formeln III und VI wird im allgemeinen 20 Gew.-% nicht überschreiten, vorzugsweise liegt er bei 0 bis 10 Gew.-% (bezogen auf die Monomeren des Segments X'), besonders bevorzugt bei 0 bis 5 Gew.-%. Als Monomeren der Formel VI seien C- und N-Vinylpyridin sowie Vinylpyrrolidin, Vinylpyrrolidon, Vinylcarbazol, Vinylimidazol sowie deren Alkylderivate, insbesondere die N-Vinylverbindungen genannt, ebenso die Hydroxy- und Dialkylaminoalkylester der Acryl- bzw. der Methacrylsäure, speziell Dimethylaminoäthyl(meth)- acrylat, Dimethylaminopropyl(meth)acrylat, Hydroxyäthyl(meth)acrylat. Die Segmente A' und X' in Formel I stehen im allgemeinen im Gewichtsverhältnis 1 : 20 bis 20 : 1, vorzugsweise 1 : 4 bis 1 : 1.

Im allgemeinen enthalten die erfindungsgemäßen Beschichtungsmittel in Form der OCP-Dispersionen das Pfropfpolymerisat A'-X' in Konzentrationen von 1 bis 80 Gew.-%, vorzugsweise 5 bis 10 Gew.-%.

Die Herstellung der Polymerdispersionen kann z. B. in Anlehnung an die deutschen Patentanmeldungen P 32 07 291.0 bzw. 32 07 292.9 vorgenommen werden.

Herstellung der Pfropfpolymerisate A'-X'

Allgemein gilt :

Das Pfropfpolymerisat A-X wird in der Regel hergestellt, indem man mit Hilfe eines geeigneten Emulgators eine Dispersion aus der Komponente A herstellt und auf diese die Komponente X unter den dafür geeigneten Reaktionsbedingungen aufpfropft.

Der Emulgator kann einen dem System A'-X' gemäß Formel I ähnlichen Aufbau besitzen, was im weiteren formelhaft durch A"-X" (Formel IA) zum Ausdruck gebracht werden soll.

Die Verfahren zur Herstellung geeigneter Emulgatoren vom Typ A"-X" sind an sich bekannt. So kann z. B. nach der Methode der Übertragungspfropfung vorgegangen werden : (Vgl. auch Houben-Weyl, Methoden der Org. Chemie, Bd. 14/1, S. 114, H.A.J. Battaerd, G.W. Tregear, Polymer Reviews, Vol. 16, Interscience (1967)).

Dazu stellt man eine 10-50 %ige, vorzugsweise 20-30 %ige Lösung eines OCP in einem geeigneten, unter Polymerisationsbedingungen inerten Lösungsmittel her, das im Normalfall einen Siedepunkt oberhalb der Verfahrenstemperatur besitzt. Als Lösungsmittel kommen z. B. Butylacetat, aliphatische cycloaliphatische und aromatische Kohlenwasserstoffe in Frage. Zu diesen OCP-Lösungen gibt man die Monomeren der Formel II bzw. eventuell die anderen Monomeren III-IV in den angegebenen Verhältnissen und polymerisiert unter Zusatz eines oder mehrerer, vorzugsweise peroxidischer Radikal-Initiatoren bei Temperaturen von 60-150 °C innerhalb von gewöhnlich 4-8 Stunden. Anzustreben ist ein möglichst vollständiger Umsatz. Vorzugsweise finden Perester wie tert.-Butylperoctoat Verwendung. Die Initiatorkonzentration richtet sich nach der Zahl der gewünschten Pfropfstellen und dem gewünschten Molekulargewicht des Segments X". Im allgemeinen liegt die Initiatorkonzentration zwischen 0,2 und 3 Gew.-%, bezogen auf das Polymerisat.

Gegebenenfalls können zur Einstellung des gewünschten Molekulargewichts der Segmente X" noch Regler mitverwendet werden. Als Regler eignen sich z. B. Schwefelregler, insbesondere mercaptogruppenhaltige Regler, z. B. Dodecylmercaptan. Die Konzentrationen an Reglern liegen im allgemeinen bei 0,1 bis 1,0 Gew.-%, bezogen auf das Gesamtpolymerisat. Eine weitere Methode zur Herstellung der Pfropfpolymerisate A"-X" stellt die Hydroperoxidation eines OCP als ersten Schritt dar. Die auf diese Weise gebildeten, kettenständigen Hydroperoxidgruppen können in einer folgenden Stufe die Pfropfpolymerisation der Vinylmonomeren initiieren. (Vgl. H.A.J. Battaerd, G.W. Tregear, Polymer Reviews loc. cit.).

Ein Verfahren zur Herstellung von geeigneten Blockpolymerisaten besteht z. B. in der anionischen Polymerisation. Dabei kann man beispielsweise so vorgehen, daß man Isopren bzw. Butadien mit einem geeigneten anionischen Initiator (z. B. metallorganische Verbindung) polymerisiert und die « lebenden »

anionischen Kettenenden mit z. B. Alkylmethacrylat bzw. Styrol umsetzt. Die so hergestellten Polymerisate werden anschließend unter Bedingungen hydriert, unter denen die vorhandenen funktionellen Gruppen nicht angegriffen werden. Bezüglich Einzelheiten der Herstellung sei auf die einschlägige Literatur verwiesen, z. B. Houben-Weyl, Methoden der Org. Chemie, 14/1, S. 110ff. ; Block Copolymers, D.C. Allport, W.H. Janes, Appl. Sci. Publishers Ltd., London, 1973 ; Graft Copolymers, H.A.J. Battaerd, G.W. Tregear, Polymer Reviews Vol. 16 (1967) ; Block and Graft Polymers, W.J. Burlant, A.S. Hoffmann, Reinhold Publishers Corp., New York, 1960.

Das Lösungsmittelsystem L

Die erfindungsgemäß in den Lösungsmittelsystemen L anzuwendenden Lösungsmittel sind auszuwählen aus solchen, die den Erfordernissen der Beschichtungstechnologie von Kunststoffen entsprechen. Die — gegebenenfals im Gemisch — anzuwendenden Lösungsmittel sollen inert und im ganzen unbedenklich sein. Im allgemeinen wird ihr Siedepunkt 250 °C bei 760 Torr nicht überschreiten. Infrage kommen z. B. Ketone wie Methylethylketon, Cyclohexanon, Alkohole wie Isopropanol, n-Butanol, Äther wie 1,4 Dioxan, Ester wie Äthylglykolacetat, Propylacetat. Im allgemeinen wird das Lösungsmittelsystem L so ausgewählt, daß es die Fähigkeit besitzt, aus den Komponenten A, X und dem Pfropf- bzw. Blockpolymerisat A-X eine Dispersion zu bilden. Bei der Auswahl von L ist hierbei auch die Verträglichkeit der Polymerkomponenten A mit X zu beachten : Im Falle von Unverträglichkeit von A und X kann als L ein für beide Komponenten gleich gutes Lösungsmittelsystem gewählt werden. Die Dispersion bildet sich dann aufgrund der Unverträglichkeit. Im Falle der Verträglichkeit von A mit X muß L so gewählt werden, daß es bei gegebener Temperatur für X ein besseres Lösungsmittelsystem als für A darstellt ; eine Dispersion bildet sich dann aufgrund der unterschiedlichen Lösungsqualität. Erfindungsgemäß wird als Lösungsmittel L vorzugsweise ein solches verwendet, das die Olefincopolymerisate im Temperaturbereich zwischen 40 und 150 Grad C von 5-300 Gew.-% anquellen läßt (« Quellungsgrad »). Der « Quellungsgrad » ist dabei wie folgt definiert : Ein OCP-Film von 1 mm Dicke, 2 cm Länge und 0,5 cm Breite bekannten Gewichts, wird bei einer definierten Temperatur (s. unten) — im beispielhaft belegten Falle bei 90 Grad C — eingetaucht und 24 Stunden lang isotherm gelagert, mit der Pinzette der Lösung entnommen, mit einem Filterpapier von anhaftenden Quellungsmittel befreit und unmittelbar anschließend ausgewogen. Als Maß der Quellung wird die Gewichtszunahme in Prozent — bezogen auf das Ausgangsgewicht — definiert. Die Quellungsmessung soll bei der Temperatur, bei der die konzentrierte OCP-Emulsion hergestellt werden soll, durchgeführt werden. Erfindungsgemäß soll bei dieser Temperatur die Quellung 5-300 % betragen. Voraussetzung für die Anwendbarkeit des Kriteriums ist, daß unter den vorstehend angegebenen Bedingungen die maximale Quellung des OCP erreicht ist.

Es sei erwähnt, daß auch Gemische aus den vorstehend beschriebenen Lösungsmitteln für das Trägermedium in Frage kommen. Der Anteil des Lösungsmittelsystems L an den erfindungsgemäß konzentrierten Polymerisationsdispersionen kann z. B. 80, im besonders günstigen Fall herab zu 20 Gew.-% betragen, vorzugsweise unter 70, praktisch meist 55-40 Gew.-%.

Herstellung der heißsiegelfähigen Beschichtungsmassen

Wie bereits vorstehend erläutert, stellt man entweder mit Hilfe eines geeigneten Emulgators eine Dispersion oder bei geeigneter Abstimmung der Polymer(un)verträglichkeit und L eine homogene Lösung der Komponente A im Lösungsmittelsystem L her und pfropft hierauf unter dafür geeigneten Reaktionsbedingungen die Komponente X auf. Im allgemeinen stehen die Anteile A und X im Gewichtsverhältnis 1 : 5 bis 5 : 1. Man richtet im allgemeinen die Reaktionsbedingungen so ein, daß der Gehalt des gesamten Polymerisats mindestens 10 Gew.-%, bezogen auf die gesamte Dispersion, (bestehend aus L plus Polymerisat) ausmacht. Erwünscht ist ein möglichst hoher Polymergehalt. In der Praxis wird ein Gehalt von ca. 40-80 Gew.-% angestrebt, im Normalfall gelten 45-60 Gew.-% als erreichbar.

Zu einem geeigneten Zeitpunkt des Herstellungsverfahrens, vorzugsweise nach abgeschlossener Pfropfung, kann dem Beschichtungsmittel zur weiteren Verbesserung der Haftfestigkeit auf Metalluntergründen ein auch für die Herstellung von « Primern » geeignetes Bindemittel wie z. B. ein Vinylchlorid/Vinylacetat/Maleinsäurecopolymerisat zugesetzt werden.

Nach dem erfindungsgemäßen Verfahren werden heißsiegelfähige Beschichtungsmassen in Dispersionsform erhalten, die eine ausreichende Stabilität für den Verarbeitungsprozeß mit sich bringen. Die Stabilität beträgt mindestens mehrere Tage, im Normalfall mehrere Wochen bis Monate.

Verfahren zur Heißsiegelung

Die erfindungsgemäßen heißsiegelfähigen Beschichtungsmittel können in Anlehnung an die Heißsiegelverfahren der Technik angewendet werden. Sie lassen sich auf den verschiedenen in Frage kommenden Untergründen anwenden, beispielsweise auf Metallen, Kunststoffen, Glas, Papier, Textilien u. anderen. Der Auftrag kann ebenfalls mit den bekannten Verfahren vorgenommen werden, beispielsweise mit Hilfe des Walzverfahrens (techn. Maßstab) oder mit einer Aufziehrakel z. B. dem k-Hand Coater

(Labormaßstab). Nach dem Auftragen muß das Lösungsmittelsystem durch Verdampfen entfernt werden. Dies kann in an sich bekannter Weise, gegebenenfalls unter verstärkter Luftzirkulation und unter Wärmezufuhr geschehen. Meist empfiehlt sich abschließend noch eine Erwärmung im Trockenofen, Wärmetunnel usw. Die Temperatur des Wärmeofens bzw. Wärmetunnels richtet sich primär nach der Natur des Untergrunds und nach dem verwendeten Lösungsmittel. Sie wird im allgemeinen im Bereich zwischen 100 und 200 °C liegen. Die Erwärmungszeiten liegen im allgemeinen bei 1 Min. Als Richtwert kann ein Bereich von 20 Sekunden bis mehrere Minuten angenommen werden. Im Falle der Beschichtung von Metallen kann z. B. auch mit einem auf die benötigte Temperatur aufgeheizten Kalander gearbeitet werden. Als Ergebnis der Behandlung bildet sich ein Oberflächenfilm aus.

Der Auftrag wird vorteilhaft so bemessen, daß die gewünschte Schichtdicke entsteht. Sie liegt in der Regel im Bereich von 1 bis 15 μ, vorzugsweise 2 bis 10 μ, wozu gegebenenfalls noch die Schichtdicke des Primers tritt.

Die Heißsiegelung kann in an sich bekannter Weise unter Verwendung der dafür entwickelten Gerätschaften durchgeführt werden. Die dabei angewendeten Bedingungen (z. B. Druck und Temperatur) hängen in gewissem Umfang von der Natur der Untergründe und der spezifischen Beschichtungsmasse ab. Die Siegelzeiten sind gewöhnlich sehr kurz, sie liegen im Bereich von Bruchteilen von Sekunden bis zu mehreren Sekunden. Je nach den Bedingungen kann auf abzugsfähige oder nicht mehr abzugsfähige Beschichtungen hingearbeitet werden. Höhere Temperaturen begünstigen im allgemeinen eine feste Verankerung der Beschichtung.

Für Polyethylen liegt die Heißsiegeltemperatur gewöhnlich im Bereich 160-210 °C, für Polypropylen bei 180-250 °C. Der Siegeldruck liegt im Bereich $Kp/cm^2$, überwiegend im Bereich 1-10 $Kp/cm^2$, vorzugsweise im Bereich 3 $Kp/cm^2$ bis 6 $Kp/cm^2$.

Vorteilhafte Wirkungen

Es liegt auf der Hand, daß die erfindungsgemäßen, heißsiegelfähigen Beschichtungsmittel auch zur Siegelung gleichartiger oder in ihrem Verhalten ähnlicher Materialien herangezogen werden können, jedoch kann diese Aufgabe häufig auch mit den Beschichtungsmitteln des Standes der Technik zufriedenstellend gelöst werden.

Das vorliegende Beschichtungsmittel eignet sich unter anderem zur Versiegelung von Metalluntergründen, insbesondere von Aluminium mit einer Reihe von gebräuchlichen Kunststoffen wie Polypropylen, Polystyrol und Polyvinylchlorid. Ferner eignet sich das erfindungsgemäße Beschichtungsmitel auch zur Versiegelung von Aluminium gegen Glas. In gewissen Fällen, z. B. bei Anwendung von Metalluntergründen, insbesondere Aluminium, kann es vorteilhaft sein, den Untergrund mit einer Grundierung (Primer) zu behandeln, d. h. vorzubeschichten. Als Primer kommen die an sich bekannten Substanzen, beispielsweise carboxylgruppenhaltige PVC-Copolymere (Vinylchlorid/Vinylacetat-Copolymere, VMCH) infrage. (Vgl. Ullmans Encyclopädie loc. cit.). Die Beschichtung mit dem Primer weist gewöhnlich eine Dicke von 1-2 μ auf. Der zu versiegelnde Kunststoff-Untergrund braucht in der Regel nicht mit einem Primer versehen werden. Alternativ kann der (gelöste) Primer jedoch auch den Polymerdispersionen gemäß der vorliegenden Erfindung zugemischt werden. Eine sehr gute Haftung auf Aluminiumfolie wird beispielsweise erreicht, wenn der Anteil des Primers (VMCH) an der Gesamtbeschichtung nach abgeschlossener Versiegelung nicht unter ca. 2,5 bis 5 Gew.-% liegen. Der Primerzusatz ist allerdings nicht ohne Einfluß auf die Qualität der Beschichtung als ganzes. Bei Verwendung des Vinylchlorid/Vinylacetat/Maleinsäure-Copolymerisats zur Versiegelung mit einem Polystyrol-Untergrund sollte der Anteil des Primers 20-40 Gew.-%, bei einem Polypropylen-Untergrund 2,5-10 Gew.-%, bezogen auf die Gesamtbeschichtung, nicht überschreiten. Der Auftrag des Primers kann — wie auch der Auftrag der erfindungsgemäßen Beschichtungsmittel — in enger Anlehnung an den Stand der Technik vorgenommen werden. Die erfindungsgemäß ausgeführten Beschichtungen zeichnen sich u. a. durch ausgezeichnete Siegelnahtfestigkeit, Abzugsfestigkeit, sehr gute Blockfestigkeit und Wärmestandfestigkeit aus.

Die folgenden Beispiele dienen zur Erläuterung der Erfindung, sollen aber nicht einschränkend wirken.

Herstellung eines heißsiegelfähigen Beschichtungsmittels (Heißsiegellack)

1. Herstellung des Emulgators

In einem Witt'schen Topf mit Impeller-Rührer, Wellenbrecher, Thermometer und Rückflußkühler, werden in 280 g Butylacetat (mit Trockeneis entgast) 84 g eines Ethylen-Propylen-Copolymeren (70 : 30[1]), das im Extruder thermisch oxidativ abgebaut wurde (1 %ige Lösung in Schindler-Öl 10W10 hat bei 100 °C eine Viskosität von 10,4-11 $mm^2/sec$) bei ca. 90 °C und ca. 250 UpM, gelöst.

Nach ca. 1 1/2 Stunden werden 20,2 g Methylmethacrylat, 20,2 g Butylmethacrylat und 1,5 g tert.-Butylperoctoat zugegeben[2]. Nach einer weiteren Stunde wird mit dem Zulauf von 148,3 g Methylmethacrylat, 148,3 g Butylmethacrylat und 4,5 g tert.-Butylperoctoat als Mischung, begonnen. Die Zulaufzeit beträgt 3 Stunden, die Rührgeschwindigkeit wird auf ca. 300 UpM erhöht. Zwei Stunden nach Zulaufende werden nochmal 0,6 g tert.-Butylperoctoat zugegeben. Danach wird die Sumpftemperatur

weitere 5 Stunden bei ca. 95 °C gehalten. Während der Gesamtzeit wird Stickstoff übergeleitet. Die erhaltene Lösung ist bräunlich-grau, Feststoff-Gehalt ca. 60 %, aktuelle Viskosität $7 \cdot 10^5$-$9 \cdot 10^5$ mPa · s. (45 %ig ca. 4 000-8 000 mPa · s). Somit wird ein Pfropfcopolymer A″-X″ mit Ethylen-Propylensequenzen und MMA-Butylmethacrylatsequenzen und einer Säurezahl Null gebildet.

[1] Produkt DUTRAL 034, Fa. Montedison ; steht für A″ in Formel IA

[2] Bildet somit das Polymer X″ mit Methylmethacrylat-Butylmethacrylat-Sequenzen und das Pfropfcopolymere A″-X″.

2. Herstellung der Dispersion

100 g Emulgator gemäß Beispiel 1 und 270 g Methylisobutylketon werden in der gleichen Apparatur vorgelegt, mit etwas Trockeneis versetzt und auf ca. 90 °C bei 400 UpM erhitzt. Nach 1 Stunde werden 150 g eines Ethylen-Propylen-Copolymerisats (70 : 30) mit Dienzusatz (2,5 C=C-Bindungen auf 1 000 C-Atome), Produkt BUNA 437 der Chemischen Werke Hüls, welches für A mit Ethylen-Propylen-Sequenzen A′ steht) eingerührt. Das Polymere löst sich nicht im Lösungsmittel L, sondern wird durch Rühren dispergiert. Das Material quillt jedoch in Methylisobutylketon bei 85 °C innerhalb 24 Stunden (siehe « Das Lösungsmittelsystem ») um 100 % an. Hierbei kann die Rührgeschwindigkeit herabgesetzt werden. Die Sumpftemperatur wird auf 95° erhöht und nach 2 1/2 Stunden weitere 75 g BUNA 437 zugegeben. Eine Stunde später Zugabe von nochmals 75 g BUNA 437. Die Sumpftemperatur wird auf 85 °C erniedrigt und nach einer halben Stunde 50 g Methylisobutylketon zugegeben. Anschließend wird noch 7 Stunden nacherhitzt bei 85 °C. Während der Gesamtzeit wird auch hier Stickstoff übergeleitet. Die erhaltene Dispersion ist blaugrau ; bei einem Feststoffgehalt (bestehend aus A) von ca. 59 % und einer aktuellen Viskosität von 75-150 mPa · s.

3. Lackherstellung (Pfropfung)

250 g Dispersion aus Versuch 2, die das Polymer A enthält, 49,3 g Methylmethacrylat, 49,3 g Butylmethacrylat, 169 g Methylisobutylketon und 1 g tert. Butylperoctoat werden in der gleichen Apparatur bei 160 UpM auf 85 °C erhitzt. Dabei entsteht das Polymer A″ mit MMA-Butylmethacrylat-Sequenzen X″ und das Pfropfcopolymer A-X mit einer Säurezahl von Null. Nach 3 Stunden werden weitere 0,2 g tert. Butylperoctoat zugegeben. Die Sumpftemperatur wird weitere 13 Stunden bei 85 °C gehalten. Vor dem Aufheizen wird etwas Trockeneis zugegeben ; während der Gesamtzeit wird Stickstoff übergeleitet.

Es wird eine weiß-blaugraue Dispersion erhalten. Feststoff-Gehalt ca. 45 %-48 %, aktuelle Viskosität 15 000-55 000 mPa · s.

4. Anwendungsbeispiel

Eine ~ 40 μ starke Aluminiumfolie wird mit Hilfe eines Hand-Coaters mit einem Primer folgender Zusammensetzung mit einer Schichtdicke von 1-2 μ (trocken) beschichtet und nach Verdunsten des Lösungsmittels 1 min bei 180 °C im Labortrockenofen getrocknet.

Primer :

10 % Vinylchlorid/Vinylacetat/Maleinsäure-Copolymerisat der Fa. Union Carbide (Vinylite VMCH[R])
90 % Äthylacetat
100 %

Anschließend wird der Primer wiederum unter Verwendung des Hand-Coaters mit einem Heißsiegellack, der unten genannten Zusammensetzung mit einer Trockenschichtdicke von ~ 6-7 μ überlackiert und ebenfalls 1 min bei 180 °C getrocknet.

Heißsiegellack :

62 Gew.-% der gemäß Beispiel 3 hergestellten konzentrierten Olefincopolymerisat-Dispersion
38 Gew.-% Methyläthylketon
100 Gew.-%

Die so beschichtete Aluminiumfolie wurde mit dem Laborheißsiegelgerät der Fa. Brugger gegen Folien aus unbehandeltem Polypropylen, PVC und Polystyrol, ferner gegen Glasplättchen (Objektträger) unter folgenden Bedingungen gesiegelt :

| | Polypropylen, Glas | PVC, Polystyrol |
|---|---|---|
| Siegeltemperatur : | 200 °C | 180 °C |
| Siegeldruck : | 6 Kp/cm² | 3 Kp/cm² |
| Siegelzeit : | 1" | 0,5" |

Die bei Normklima (23 °C, 50 % rel. Luftfeuchtigkeit) gelagerten Proben werden in 15 mm breite Streifen geschnitten und in der Zugprüfmaschine nach DIN 51 221 geprüft (im Falle von Glas werden 25 mm breite Objektträger eingesetzt).

Als Siegelnahtfestigkeit wird die zum Trennen der Verbundfolie erforderliche Kraft, die zog. Abzugsfestigkeit in N/15 bzw. 25 mm Streifenbreite angegeben.

Zur Ermittlung der Wärmestandfestigkeit wird die versiegelte Kunststoff-Folie an ihrem freien Ende in einem Labortrockenofen bei 60 °C aufgehängt und das freie Ende der Aluminiumfolie mit einem 200 g-Gewicht belastet. Gute Wärmestandfestigkeit ist vorhanden, wenn die Haftung zwischen Aluminium und Kunststoff nach 1-stündiger Lagerung unter genannten Bedingungen nicht verlorengeht.

| Wärmestandfestigkeit | Untergrund | Siegelnahtfestigkeit |
|---|---|---|
| gegeben | Polypropylen | ca. 8 N |
| gegeben | Polystyrol | 9-10 N |
| gegeben | PVC | ca. 10 N |
| — | Glas | 10-15 N (je nach Glas) |

5. Lackherstellung (Pfropfung)

252 g Dispersion aus Versuch 2, 5,55 g Acrylsäure, 24,97 g Methylmethacrylat, 24,97 g Butylmethacrylat, 92,6 g Methylisobutylketon und 0,56 g tert. Butylperoctoat werden in der gleichen Apparatur bei 160 UpM auf 85 °C erhitzt. Nach 3 Stunden werden weitere 0,56 g tert. Butylperoctoat zugegeben. Die Sumpftemperatur wird weitere 13 Stunden bei 85 °C gehalten. Vor dem Aufheizen wird etwas Trockeneis zugegeben ; während der Gesamtzeit wird Stickstoff übergeleitet.

Es wird eine weiß-blaugraue Dispersion enthaltend ein Polymer A X mit Ethylen-Propylen-Sequenzen A' und MMA-Butylmethacrylat-Acrylsäuresequenzen X' mit einer Säurezahl von 24 mg KOH pro Gramm Polymer erhalten.

6. Anwendungsbeispiel ohne Primer

Eine ~ 40 μ starke Aluminiumfolie wird mit Hilfe eines Hand-Coaters mit einem Heißsiegellack, der unten genannten Zusammensetzung mit einer Trockenschichtdicke von ~ 1-2 μ überlackiert und ebenfalls 1 min bei 180 °C getrocknet.

Heißsiegellack :

62 Gew.-% der gemäß Beispiel 5 hergestellten konzentrierten Olefincopolymerisat-Dispersion
38 Gew.-% Methyläthylketon
100 Gew.-%

Die so beschichtete Aluminiumfolie wurde mit dem Laborheißsiegelgerät der Fa. Brugger gegen Folien aus unbehandeltem Polypropylen unter folgenden Bedingungen gesiegelt :

| | |
|---|---|
| Siegeltemperatur : | 200 °C |
| Siegeldruck : | 6 kp/cm² |
| Siegelzeit : | 1 sec |

Die weitere Auswertung geschah analog Beispiel 4.

Die Wärmestandfestigkeit wird mit « gut » beurteilt. Die Siegelnahtfestigkeit beträgt 7,6 N.

**Patentansprüche**

1. Heißsiegelfähiges, zur Versiegelung verschiedenartiger Untergründe geeignetes Beschichtungsmittel bestehend aus einer filmbildenden Dispersion mindestens zweier verschiedener Polymertypen A und X mit jeweils unterschiedlichen Hafteigenschaften in einem organischen Lösungsmittelsystem L, dadurch gekennzeichnet, daß der eine Polymertyp A ein Olefinpolymer oder Olefincopolymer, der andere Polymertyp X ein Acrylharz darstellt und daß mindestens eine der Polymertypen bei Raumtemperatur mit dem organischen Lösungsmittelsystem L unbegrenzt mischbar ist, daß beide Polymertypen jeweils eine Säurezahl von 0 bis 160 mg KOH pro Gramm Polymerisat besitzen und daß die Dispersion außer den beiden Polymertypen A und X ein aus Komponenten, die beiden Polymertypen entsprechen, aufgebautes

Polymerisat enthält.

2. Heißsiegelfähiges, zur Versiegelung verschiedenartiger Untergründe geeignetes Beschichtungsmittel gemäß Anspruch 1, dadurch gekennzeichnet, daß das zusätzlich vorhandene, aus Komponenten, die beiden Polymertypen A und X entsprechen, aufgebaute Polymerisat, ein Pfropfpolymerisat oder ein Blockpolymerisat darstellt.

3. Heißsiegelfähiges, zur Versiegelung verschiedenartiger Untergründe geeignetes Beschichtungsmittel gemäß den Ansprüchen 1 und 2, dadurch gekennzeichnet, daß das Pfropf- oder Blockpolymerisat der Formel I

$$A'—X' \qquad I$$

worin A' für Olefin- und/oder Olefincopolymerisat-Sequenzen, hydrierten Polyisopren-Sequenzen oder hydrierten Copolymeren aus Butadien/Isopren und X' für Sequenzen von Acrylharztyp stehen, entspricht.

4. Heißsiegelfähiges, zur Versiegelung verschiedenartiger Untergründe geeignetes Beschichtungsmittel gemäß den Ansprüchen 1 bis 3, dadurch gekennzeichnet, daß die Dispersion in Lösungsmittelfreiem Zustand auf dem einen zu versiegelnden Untergrund einen bis wenigstens 40 Grad C blockfesten Film bildet, der oberhalb 100 Grad C unter Heißsiegelbedingungen mit dem anderen, zu versiegelnden Untergrund verklebt.

5. Heißsiegelfähiges Beschichtungsmittel gemäß den Ansprüchen 1 bis 3, dadurch gekennzeichnet, daß die Anteile A und X im Pfropfpolymerisat oder Blockpolymerisat im Gewichtsverhältnis 1 : 20 bis 20 : 1 stehen.

6. Heißsiegelfähiges, zur Versiegelung verschiedenartiger Untergründe geeignetes Beschichtungsmittel gemäß den Ansprüchen 1 bis 5, dadurch gekennzeichnet, daß keines der vorhandenen Polymerisate einen Carboxylgruppengehalt von mehr als 30 Gew.-%, vorzugsweise weniger als 20 Gew.-%, bezogen auf den individuellen Polymertyp, aufweist.

7. Heißsiegelfähiges, zur Versiegelung verschiedenartiger Untergründe geeignetes Beschichtungsmittel gemäß Anspruch 1, dadurch gekennzeichnet, daß das Lösungsmittelsystem L die Olefinpolymeren oder Olefincopolymeren im wesentlichen nicht löst.

8. Heißsiegelfähiges, zur Versiegelung verschiedenartiger Untergründe geeignetes Beschichtungsmittel gemäß den Ansprüchen 1 und 7, dadurch gekennzeichnet, daß die Olefinpolymeren oder -copolymeren im Temperaturbereich zwischen 40 und 150 Grad C unter Anwendung von Scherkräften im Lösungsmittelsystem L emulgiert worden sind.

9. Heißsiegelfähiges, zur Versiegelung verschiedenartiger Untergründe geeignetes Beschichtungsmittel gemäß Anspruch 8, dadurch gekennzeichnet, daß das Lösungsmittelsystem L die Olefincopolymeren im Temperaturbereich zwischen 40 und 150 Grad C bis zu einen Grad von 5-300 Gew.-% anquellen läßt.

10. Heißsiegelfähiges, zur Versiegelung verschiedenartiger Untergründe geeignetes Beschichtungsmittel gemäß den Ansprüchen 1 bis 9, dadurch gekennzeichnet, daß der Anteil der Olefinpolymerisate und/oder Copolymerisate an der Dispersionen 20-65 Gew.-%, vorzugsweise 30-50 Gew.-%, beträgt.

11. Heißsiegelfähiges, zur Versiegelung verschiedenartiger Untergründe geeignetes Beschichtungsmittel gemäß den Ansprüchen 1 bis 9, dadurch gekennzeichnet, daß der Anteil der Pfropfpolymerisate der Formel I an der Dispersion 1 bis 80 Gew.-%, vorzugsweise 5-30 Gew.-%, beträgt.

12. Heißsiegelfähiges, zur Versiegelung verschiedenartiger Untergründe geeignetes Beschichtungsmittel gemäß den Ansprüchen 1 bis 11, dadurch gekennzeichnet, daß der gesamte Olefinpolymerisat- und/oder Copolymerisatanteil A zu dem genannten Acrylharzanteil X der Dispersionen im Gewichtsverhältnis 1 : 20 bis 20 : 1 steht.

13. Heißsiegelfähiges, zur Versiegelung verschiedenartiger Untergründe geeignetes Beschichtungsmittel gemäß den Ansprüchen 1 bis 12, dadurch gekennzeichnet, daß die filmbildende Dispersion noch zusätzlich an sich übliche Primer für die zu beschichtenden Untergründe in Mengen von 0 bis 50 Gew.-% bezogen auf die Gesamtheit der vorhandenen Polymeren, enthält.

14. Verfahren zur Versiegelung verschiedenartiger Untergründe, dadurch gekennzeichnet, daß heißsiegelfähige Beschichtungsmittel gemäß den Ansprüchen 1 bis 13 verwendet werden.

15. Verfahren gemäß Anspruch 14, dadurch gekennzeichnet, daß man einen Metalluntergrund gegen einen davon verschiedenen Untergrund versiegelt.

16. Verfahren gemäß Anspruch 15, dadurch gekennzeichnet, daß man einen Aluminiumtergrund gegen einen Kunststoffuntergrund, ausgewählt aus den Kunststofftypen Polypropylen, Polystyrol oder Polyvinylchlorid versiegelt.

17. Verfahren gemäß Anspruch 15, dadurch gekennzeichnet, daß man einen Aluminiumuntergrund gegen Glas versiegelt.

**Claims**

1. Heat-sealable coating agent, suitable for sealing different substrates, and consisting of a film-forming dispersion of at least two different polymer types A and X, each having different adhesive

properties, in an organic solvent system L, characterised in that one polymer type, A, represents an olefine polymer or olefine copolymer, the other polymer type, X, represents an acrylic resin, and at least one of the polymer types is miscible in all proportions with the organic solvent system L at room temperature, both polymer types each have an acid number of 0 to 160 mg of KOH per gram of polymer, and the dispersion contains, in addition to the two polymer types A and X, a polymer composed of components which correspond to the two polymer types.

2. Heat-sealable coating agent suitable for sealing different substrates, according to claim 1, characterised in that the additionally present polymer composed of components corresponding to the two polymer types A and X represents a graft polymer or a block polymer.

3. Heat-sealable coating agent, suitable for sealing different substrates, according to claims 1 and 2, characterised in that the graft polymer or block polymer corresponds to the formula I

$$A'—X' \qquad I$$

wherein A' represents olefine and/or olefine copolymer sequences, hydrogenated polyisoprene sequences or hydrogenated copolymers of butadiene/isoprene and X' represents sequences of the acrylic resin type.

4. Heat-sealable coating agent, suitable for sealing different substrates, according to claims 1 to 3, characterised in that the dispersion, in the solvent-free state, forms a film on the substrate to be sealed, which film is resistant to blocking at least up to 40 °C and adheres, above 100 °C, under heat-sealing conditions, to the other substrate to be sealed.

5. Heat-sealable coating agent according to claims 1 to 3, characterised in that the components A and X are present in a weight ratio of 1 : 20 to 20 : 1 in the graft polymer or block polymer.

6. Heat-sealable coating agent, suitable for sealing different substrates, according to claims 1 to 5, characterised in that none of the polymers present has a carboxyl group content of more than 30 % by weight, preferably less than 20 % by weight, relative to the particular polymer type.

7. Heat-sealable coating agent suitable for sealing different substrates, according to claim 1, characterised in that the olefine polymers or olefine copolymers are substantially insoluble in the solvent system L.

8. Heat-sealable coating agent, suitable for sealing different substrates, according to claims 1 and 7, characterised in that the olefine polymers or copolymers have been emulsified in the solvent system L in the temperature range of 40 to 150 °C, using shearing forces.

9. Heat-sealable coating agent, suitable for sealing different substrates, according to claim 8, characterised in that the solvent system L allows the olefine copolymers to swell to a degree of 5-300 % by weight in the temperature range of 40 to 150 °C.

10. Heat-sealable coating agent, suitable for sealing different substrates, according to claims 1 to 9, characterised in that the content of olefine polymers and/or copolymers in the dispersion is 20-65 % by weight, preferably 30-50 % by weight.

11. Heat-sealable coating agent suitable for sealing different substrates, according to claims 1 to 9, characterised in that the content of graft polymers of the formula I in the dispersion is 1 to 80 % by weight, preferably 5-30 % by weight.

12. Heat-sealable coating agent, suitable for sealing different substrates, according to claims 1 to 11, characterised in that the weight ratio of the total olefine polymer and/or copolymer component A to the said acrylic resin component A in the dispersions is from 1 : 20 to 20 : 1.

13. Heat-sealable coating agent, suitable for sealing different substrates, according to claims 1 to 12, characterised in that the film-forming dispersion additionally contains primers customary per se for the substrates to be coated, in amounts of 0 to 50 % by weight relative to the total amount of the polymers present.

14. Process for sealing different substrates, characterised in that heat-sealable coating agents according to claims 1 to 13 are used.

15. Process according to claim 14, characterised in that a metal substrate is sealed to a substrate different therefrom.

16. Process according to claim 15, characterised in that an aluminium substrate is sealed to a plastics substrate selected from the plastics types polypropylene, polystyrene or polyvinyl chloride.

17. Process according to claim 15, characterised in that an aluminium substrate is sealed to glass.

**Revendications**

1. Produit d'enduction thermosoudable, convenant pour le soudage de supports ou subjectiles de natures différentes, se composant d'une dispersion filmogène d'au moins deux types de polymère différents A et X ayant des propriétés d'adhérence respectivement différentes dans un système solvant organique L, caractérisé en ce que l'un des types de polymère A est un polymère d'oléfine ou un copolymère d'oléfine, l'autre type de polymère X est une résine acrylique et en ce que l'un au moins des types de polymère est miscible sans limite au système solvant organique L à la température ambiante, en ce que les deux types de polymère ont chacun un indice d'acide de 0 à 160 mg de KOH par gramme de

polymère et en ce que la dispersion contient, en dehors des deux types de polymère A et X, un polymère constitué par des composants qui correspondent aux deux types de polymère.

2. Produit d'enduction thermosoudable, convenant pour le soudage de supports ou subjectiles de natures différentes selon la revendication 1, caractérisé en ce que le polymère présent en plus, constitué par des composants qui correspondent aux deux types de polymère A et X, représente un polymère greffé ou un polymère séquencé.

3. Produit d'enduction thermosoudable, convenant pour le soudage de supports ou subjectiles de natures différentes selon la revendication 1 ou 2, caractérisé en ce que le polymère greffé ou séquencé répond à la formule I

$$A'—X' \qquad I$$

dans laquelle A' est mis pour des séquences d'oléfine et/ou de copolymère d'oléfine, des séquences de polyisoprène hydrogéné ou des copolymères hydrogénés de butadiène et d'isoprène et X' est mis pour des séquences du type résine acrylique.

4. Produit d'enduction thermosoudable, convenant pour le soudage de supports ou subjectiles de natures différentes selon l'une quelconque des revendications 1 à 3, caractérisé en ce que la dispersion à l'état exempt de solvant forme, sur l'un des subjectiles à souder, un film qui est résistant à l'adhérence de contact jusqu'à 40 °C au moins et qui, au-dessus de 100 °C dans des conditions de thermosoudage, colle à l'autre subjectile à souder.

5. Produit d'enduction thermosoudable selon l'une quelconque des revendications 1 à 3, caractérisé en ce que les parts de A et de X dans le polymère greffé ou le polymère séquencé sont dans un rapport en poids compris entre 1 : 20 et 20 : 1.

6. Produit d'enduction thermosoudable, convenant pour le soudage de supports ou subjectiles de natures différentes selon l'une quelconque des revendications 1 à 5, caractérisé en ce qu'aucun des polymères présents ne présente une teneur en groupements carboxyle de plus de 30 % en poids, cette teneur étant de préférence de moins de 20 % en poids, sur la base du type de polymère individuel.

7. Produit d'enduction thermosoudable, convenant pour le soudage de supports ou subjectiles de natures différentes selon la revendication 1, caractérisé en ce que le système solvant L ne dissout pratiquement pas le polymère d'oléfine ou le copolymère d'oléfine.

8. Produit d'enduction thermosoudable, convenant pour le soudage de supports ou subjectiles de nature différentes selon l'une quelconque des revendications 1 à 7, caractérisé en ce que les polymères ou copolymères d'oléfine ont été émulsionnés dans le système solvant L, dans la gamme de température comprise entre 40 et 150 °C, avec application de forces de cisaillement.

9. Produit d'enduction thermosoudable, convenant pour le soudage de supports ou subjectiles de natures différentes selon la revendication 8, caractérisé en ce que le système solvant L fait gonfler les copolymères d'oléfine jusqu'à un degré de 5 à 300 % en poids dans la gamme de température comprise entre 40 et 150 °C.

10. Produit d'enduction thermosoudable, convenant pour le soudage de supports ou subjectiles de natures différentes selon l'une quelconque des revendications 1 à 9, caractérisé en ce que la part des polymères et/ou copolymères d'oléfine dans la dispersion s'élève à 20-65 % en poids, de préférence à 30-50 % en poids.

11. Produit d'enduction thermosoudable, convenant pour le soudage de supports ou subjectiles de natures différentes selon l'une quelconque des revendications 1 à 9, caractérisé en ce que la part des polymères greffés de formule I dans la dispersion s'élève à 1-80 % en poids, de préférence à 5-30 % en poids.

12. Produit d'enduction thermosoudable, convenant pour le soudage de supports ou subjectiles de natures différentes selon l'une quelconque des revendication 1 à 11, caractérisé en ce que la part totale des polymères et/ou copolymères d'oléfine A est, à ladite part de résine acrylique X des dispersions, dans un rapport en poids compris entre 1 : 20 et 20 : 1.

13. Produit d'enduction thermosoudable, convenant pour le soudage de supports ou subjectiles de natures différentes selon l'une quelconque des revendications 1 à 12, caractérisé en ce que la dispersion filmogène contient en plus des substances d'apprêt en soi connues pour les subjectiles à enduire, dans des proportions de 0 à 50 % en poids sur la base de la totalité des polymères présents.

14. Procédé pour le soudage de subjectiles de natures différentes, caractérisé en ce qu'on utilise des produits d'enduction thermosoudables selon l'une quelconque des revendications 1 à 13.

15. Procédé selon la revendication 14, caractérisé en ce qu'on soude un subjectile métallique contre un subjectile différent de lui.

16. Procédé selon la revendication 15, caractérisé en ce qu'on soude un subjectile d'aluminium contre un subjectile de matière plastique, choisi parmi les types de matière plastique polypropylène, polystyrène ou chlorure de polyvinyle.

17. Procédé selon la revendication 15, caractérisé en ce qu'on soude un subjectile d'aluminium contre du verre.